(19) Europäisches Patentamt
European Patent Office
Office européen des brevets

(11) EP 2 142 478 B1

(12) FASCICULE DE BREVET EUROPEEN

(45) Date de publication et mention de la délivrance du brevet:
**25.05.2011 Bulletin 2011/21**

(21) Numéro de dépôt: **08788129.8**

(22) Date de dépôt: **04.04.2008**

(51) Int Cl.:
***C01G 25/02*** *(2006.01)* ***B01J 13/00*** *(2006.01)*
***C08K 3/22*** *(2006.01)*

(86) Numéro de dépôt international:
**PCT/FR2008/050606**

(87) Numéro de publication internationale:
**WO 2008/139100 (20.11.2008 Gazette 2008/47)**

(54) **PROCEDE DE PREPARATION D'UNE SOLUTION COLLOÏDALE DE ZIRCONE**

VERFAHREN ZUR HERSTELLUNG EINER KOLLOIDALEN ZIRKONIUMLÖSUNG

METHOD FOR PREPARING A COLLOIDAL ZIRCONIA SOLUTION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **04.04.2007 FR 0754264**

(43) Date de publication de la demande:
**13.01.2010 Bulletin 2010/02**

(73) Titulaire: **Essilor International (Compagnie Générale D'Optique)**
**94220 Charenton le Pont (FR)**

(72) Inventeurs:
- **CHAPUT, Frédéric**
  **F-69003 Lyon (FR)**
- **BERIT-DEBAT, Fabien**
  **F-94220 Charenton-le-pont (FR)**
- **BIVER, Claudine**
  **F-94220 Charenton Le Pont (FR)**
- **LESARTRE, Noémie**
  **F-75001 Paris (FR)**

(74) Mandataire: **Catherine, Alain et al**
**Cabinet HARLE et PHELIP**
**14-16, rue Ballu**
**75009 Paris (FR)**

(56) Documents cités:
**EP-A- 0 229 657**
**JP-A- 6 321 541**
**US-A1- 2003 021 566**
**US-A1- 2005 059 766**
**US-A1- 2006 148 950**
**US-A1- 2006 204 679**

- **Y. MURASE, E. KATO: "Preparation of zirconia whiskers from zirconium hydroxide in sulfuric acid solutions under hydrothermal conditions at 200°C" J.AM. CERAM. SOC, vol. 84, no. 111, 2001, pages 2705-2706, XP002502465**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention se rapporte à un procédé de préparation de solutions colloïdales de zircone et à l'incorporation de ces solutions colloïdales dans différentes matrices telles que des revêtements anti-rayures et/ou anti-abrasion pour verre de lunettes ou des substrats ophtalmiques, en particulier pour verres de lunettes.

Il est bien connu, notamment dans le domaine des verres de lunettes, d'utiliser des colloïdes minéraux dans les revêtements anti-abrasion et/ou anti-rayures, pour améliorer les propriétés de surface des verres organiques et/ou modifier l'indice de réfraction.

De tels colloïdes sont aussi utilisés dans des couches d'antireflets obtenus par voie sol/gel ainsi que dans des primaires antichocs.

Un des colloïdes connu est la zircone ou oxyde de zirconium.

Des charges colloïdales, telles que de la silice colloïdale ou des oxydes minéraux, comme l'oxyde de titane, de zirconium, d'étain ou d'antimoine, à indice de réfraction élevé, sont utilisés dans les revêtements protecteurs pour verres de lunettes. Leur présence permet de renforcer la dureté du réseau constitué par la matrice d'époxysilane et/ou d'augmenter l'indice de réfraction.

Le document JP 06 321541 décrit un procédé de production d'une poudre de particules ultrafines, sphériques, de zircone qui comprend le mélange d'un composé de zirconium tel que le chlorure de zirconyle, l'hydroxyde de zirconium, l'hydrate de zircone ou le carbonate basique de zirconium avec de l'acide chlorhydrique ou de l'eau, soumettre le mélange ou solution à un traitement hydrothermique à 100 - 220°C, à refroidir à une température de 50°C ou moins, à lyophiliser à une température de 50°C ou moins et à ensuite traiter thermiquement le produit sec à une température de 100°C ou plus pour obtenir une poudre de zircone ayant un diamètre de particule de 0,1 à 0,8μm.

La demande de brevet US 2006/0148950 décrit un procédé de fabrication de sol de zircone dans lequel les particules de zircone ne sont substantiellement pas associées et ont une dimension moyenne d'au plus 50 nm. Ce procédé consiste à préparer un premier matériau contenant un sel de zirconium et à soumettre ce premier matériau à un premier traitement hydrothermique pour former un produit intermédiaire contenant du zirconium et un sous-produit, à former un second matériau en enlevant au moins une partie du sous-produit et à soumettre le second matériau à un second traitement hydrothermique pour former le sol de zircone.

La demande de brevet US 2005/0059766 décrit des nanoparticules de zircone ayant une taille de particules de 5 à 50 nm et le traitement de ces particules avec un agent de traitement de surface.

La demande de brevet US 2006/0204679 décrit la préparation d'une dispersion de nanoparticules, colloïdales, modifiées de zirconium destinées à être incorporées dans une résine durcissable.

La demande de brevet US 2003/0021566 décrit un matériau hybride organique/inorganique d'indice de réfraction élevé pouvant comporter des nanoparticules de zircone.

Afin d'obtenir la transparence des revêtements et éviter une diffusion de la lumière, il est nécessaire de disposer de colloïdes dont les particules sont de faible taille, et qui ne forment pas d'agrégats.

Il est possible d'incorporer de telles charges à des teneurs élevées dans le revêtement, soit jusqu'à environ 50 à 60% en poids de matière sèche du revêtement.

Différentes techniques de synthèse de colloïdes de zircone sont connues.

D'une manière générale, cette synthèse demeure particulièrement délicate.

Un premier problème technique est de disposer d'un procédé permettant d'obtenir de façon reproductible des tailles de particules faibles, ou nanoparticules, c'est-à-dire inférieure à 50 nm, préférentiellement inférieure à 20nm.

Un second problème technique à résoudre est d'éviter que ces particules forment des agrégats.

A cet égard, il convient d'éviter la formation d'agrégats non seulement lors de la préparation du sol mais aussi lorsque ceux-ci sont incorporés dans une matrice polymère. Le brevet EP233343 décrit la formation de sols constitués de tels agrégats, qui peuvent trouver un intérêt comme charges renforçantes dans des polymères, mais dont les dimensions ne sont pas adaptées à une utilisation dans le domaine ophtalmique

Les solutions de colloïdes de zircone doivent être stables dans le temps.

Elles doivent être compatibles avec de nombreux types de polymères tels que des substrats de lentille ophtalmique, des revêtements de type sol/gel, des revêtements photopolymérisables (méth)acrylates ou thio(méth)acrylates, des primaires tels que des latex acryliques ou polyuréthanes.

La demande de brevet US 2002/004544 décrit la synthèse d'un sol de zircone en phase aqueuse ayant une dimension moyenne de particules ayant moins de 20nm qui consiste à fournir une solution aqueuse comprenant un sel d'acide de zirconium polyéther et d'hydrolyser ce sel dans des conditions hydrothermales à une température et une pression qui permettent la cristallisation.

On obtient un sol de zircone cubique et/ou tétragonale (majoritairement) et monoclinique.

La présente invention propose une solution alternative à cette technique, qui comporte de nombreux avantages comme cela ressortira de la description ci-après.

Les problèmes techniques énumérés préalablement sont résolus par un procédé de préparation d'une solution

colloïdale de particules de zircone non agglomérées, comprenant les étapes suivantes :

a) l'obtention d'une suspension d'hydroxyde de zirconium, de préférence aqueuse,
b) l'ajout à ladite suspension d'un acide minéral dans un rapport molaire [acide minéral]/[Zr] <0,5,
c) le traitement hydrothermal de ladite suspension,
d) la récupération de la solution colloïdale de particules de zircone.

Préférentiellement, la suspension d'hydroxyde de zirconium est obtenue par traitement basique d'une solution aqueuse d'oxychlorure de zirconium, préférentiellement par ajout d'une solution ammoniacale.

La suspension d'hydroxyde de zirconium est obtenue par la séparation et la purification d'un précipité d'hydroxyde de zirconium issu dudit traitement basique, suivie d'une redispersion en milieu aqueux dudit précipité.

Ladite purification est préférentiellement effectuée par redispersion et filtration successives dans de l'eau désionisée.

Le pH de la suspension d'hydroxyde de zirconium est préférentiellement de l'ordre de 7 à l'étape a).

Un élément essentiel de l'invention consiste à procéder à un traitement hydrothermal de la suspension d'hydroxyde de zirconium à une teneur en acide telle que le rapport molaire [acide minéral]/[Zr] soit inférieur à 0,5 et varie de 0 ,01 à moins de 0,5, préférentiellement de 0,05 à 0,2. En effet, si l'on procède à des teneurs en acide plus élevées ou en milieu basique, on obtient soit des agrégats, soit des particules de dimension mal contrôlées.

Comme acides minéraux utilisables, on peut citer l'acide chlorhydrique, l'acide nitrique, l'acide chlorhydrique étant préféré.

Le traitement hydrothermal est préférentiellement effectué en autoclave à une température de 150 à 200°C, et de préférence de l'ordre de 165°C, pendant une durée de 3 heures à 3 jours.

Le sol obtenu comprend un mélange de zircone tétragonale(majoritaire) et monoclinique.

La teneur en extrait sec de la solution colloïdale de zircone varie de préférence de 3 à 10 %, préférentiellement de 4 à 7% en poids.

Le procédé comprend de préférence une étape supplémentaire de greffage, à la surface des particules de zircone de composés porteurs de groupements assurant une répulsion stérique et/ou électrostatique entre lesdites particules de zircone.

Ces composés porteurs de groupements assurant une répulsion stérique et/ou électrostatique comprennent de préférence une fonction acide carboxylique ou acide phosphonique ou sulphonique assurant leur greffage.

Préférentiellement, le procédé de préparation d'un sol de zircone comprend une étape additionnelle d'incorporation d'un solvant réactif.

On obtient alors une composition de particules de zircone, qui fait également l'objet de l'invention.

Préférentiellement, le solvant réactif est introduit par redispersion des particules de zircone, initialement en milieu aqueux, dans le solvant réactif.

Un solvant réactif est défini comme un monomère ayant une bonne affinité avec les nanoparticules de zircone qui permet leur bonne dispersion, avec, en outre, une fonction acrylique ou méthacrylique qui permet l'incorporation au réseau thermodurcissable par photopolymérisation.

Préférentiellement, on utilise la fonction alcool pour assurer la redispersion.

Ce solvant réactif est préférentiellement l'hydroxyéthylméthacrylate (HEMA).

L' HEMA est un bon solvant pour la redispersion de la zircone : la fonction alcool de la molécule assure la bonne dispersion des nanoparticules, tandis que la fonction méthacrylate permet d'incorporer la molécule dans une matrice thermodurcissable.

De préférence, la composition de particules de zircone comprend au moins un monomère additionnel comportant au moins deux fonctions choisies parmi les fonctions acrylates, méthacrylates, thioacrylates, thiométhacrylates.

Préférentiellement, le monomère additionnel est le bisphénol-A 4-éthoxylé diméthacrylate, ou bien le BMTES.

Parmi les substrats en verre organique dans lesquels on peut incorporer des particules de zircone provenant de sols obtenus selon le procédé de l'invention, on peut citer les substrats poly(alkyl)acrylate, en particulier ceux obtenus par polymérisation des méthacrylates d'alkyle, en particulier des méthacrylates d'alkyle en $C_1$-$C_4$, tels que le méthyl (méth)acrylate et l'éthyl(méth)acrylate, des (méth)acrylates aromatiques polyéthoxylés tels que les bisphénolates diméthacrylates polyéthoxylés, des dérivés allyliques tels que les allyl carbonates de polyols aliphatiques ou aromatiques, linéaires ou ramifiés, des thio-(méth)acryliques, les substrats en polythiouréthane, en polycarbonate (PC) et en polyépisulfure.

Parmi les substrats recommandés, on peut citer des substrats obtenus par polymérisation des allyl carbonates de polyols parmi lesquels on peut mentionner l'éthylèneglycol bis allyl carbonate, le diéthylène glycol bis 2-méthyl carbonate, le diéthylèneglycol bis (allyl carbonate), l'éthylèneglycol bis (2-chloro allyl carbonate), le triéthylèneglycol bis (allyl carbonate), le 1,3-propanediol bis (allyl carbonate), le propylène glycol bis (2-éthyl allyl carbonate), le 1,3-butylènediol bis (allyl carbonate), le 1,4-butènediol bis (2-bromo allyl carbonate), le dipropylèneglycol bis (allyl carbonate), le

triméthylèneglycol bis (2-éthyl allyl carbonate), le pentaméthylèneglycol bis (allyl carbonate), l'isopropylène bis phénol-A bis (allyl carbonate).

Parmi les substrats également recommandés, on peut citer les substrats obtenus par polymérisation des monomères thio(méth)acryliques, tels que ceux décrits dans la demande de brevet français FR-A-2 734 827. Bien évidemment, les substrats peuvent être obtenus par polymérisation de mélanges des monomères ci-dessus.

Les substrats préférés sont les substrats obtenus par photopolymérisation.

La teneur en particules de zircone dans les substrats peut varier dans de grandes proportions selon les propriétés recherchées.

Typiquement, la teneur en particules de zircone peut varier de 0,1 à 50% en poids par rapport au poids total polymère+ particules, préférentiellement de 10 à 40 %.

Les solutions colloïdales de zircone peuvent également être incorporées dans des compositions de revêtement de type sol/gel, anti-abrasion, ou anti-reflets.

Le sol est élaboré à partir d'au moins un alkoxysilane tel qu'un époxysilane, préférentiellement trifonctionnel, et/ou un hydrolysat de celui-ci, obtenu par exemple par hydrolyse avec une solution d'acide chlorhydrique HCl. Après l'étape d'hydrolyse, dont la durée est généralement comprise entre 2h et 24h, préférentiellement entre 2h et 6h, on ajoute, optionnellement des catalyseurs. Un composé tensio-actif est de préférence également ajouté afin de favoriser la qualité optique du dépôt.

Les époxyalkoxysilanes préférés comportent un groupement époxy et trois groupements alkoxy, ces derniers étant directement liés à l'atome de silicium.

Un époxyalkoxysilane préféré peut être un alkoxysilane porteur d'un groupement β-(3,4- époxycyclohexyle), tel que le P-(3,4-epoxycyclohexyl)éthyltriméthoxysilane.

Les époxyalkoxysilanes particulièrement préférés répondent à la formule (I) :

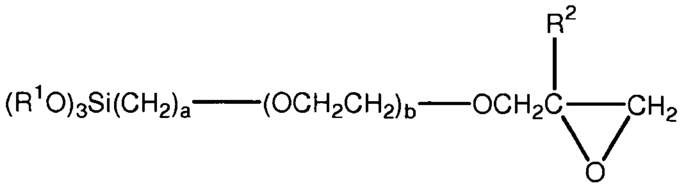

(I)

dans laquelle :

$R^1$ est un groupement alkyle de 1 à 6 atomes de carbone, préférentiellement un groupement méthyle ou éthyle,

$R^2$ est un groupement méthyle ou un atome d'hydrogène,

a est un nombre entier de 1 à 6,

b représente 0, 1 ou 2.

Des exemples de tels époxysilanes sont le γ-glycidoxypropyl-triéthoxysilane ou le γ-glycidoxypropyltriméthoxysilane.

On utilise préférentiellement le γ-glycidoxypropyltriméthoxysilane.

Comme époxysilanes, on peut également utiliser des époxydialkoxysilanes tels que le γ-glycidoxypropylméthyldiméthoxysilane, γ-glycidoxypropylméthyldiéthoxysilane et le γ-glycidoxyéthoxypropylméthyldiméthoxysilane.

Mais les époxydialkoxysilanes sont préférentiellement utilisés à des teneurs plus faibles que les époxytrialkoxysilanes cités précédemment.

D'autres alkoxysilanes préférés répondent à la formule suivante :

$$R^3_c\ R^4_d\ Si\ Z_{4-(c+d)} \quad (II)$$

formule dans laquelle $R^3$ et $R^4$ sont choisis parmi les groupes alkyle, méthacryloxyalkyle, alcényle et aryle substitués ou non (des exemples de groupements alkyles substitués sont les alkyles halogénés, notamment chlorés ou fluorés); Z est un groupe alkoxy, alkoxyalkoxy ou acyloxy ; c et d représentent 0, 1 or 2, respectivement; et c+d représente 0, 1 ou 2. Cette formule inclut les composés suivants : (1) tétraalkoxysilanes, tels que le méthylsilicate, éthylsilicate, n-propylsilicate, isopropylsilicate, n-butylsilicate, sec-butylsilicate, and t-butylsilicate, et/ou (2) trialkoxysilanes, trialkoxyalkoxylsilanes ou des triacyloxysilanes, tels que méthyltriméthoxysilane, méthyltriéthoxysilane, vinyltriméthoxysilane, vinyltriéthoxysilane, vinyltriméthoxyéthoxysilane, vinyltriacétoxysilane, phényltriméthoxysilane, phényltriéthoxysilane, γ-chloropropyl-triméthoxysilane,γ-trifluoropropyltriméthoxysilane, méthacryloxypropyltriméthoxysilane, et/ou (3) dialkoxysilanes, tels que : diméthyldiméthoxysilane, γ-chloropropylméthyldiméthoxysilane et méthylphényldiméthoxysilane.

Lorsqu'on utilise un hydrolysat d'alkoxysilane(s), celui-ci est préparé de façon connue en soi.

Les techniques exposées dans les brevet EP 614957 et US 4 211 823 peuvent être utilisées.

L'hydrolysat de silane est préparé en ajoutant de l'eau ou une solution d'acide chlorhydrique ou d'acide sulfurique au(x) silane(s). Il est possible, également, de pratiquer l'hydrolyse sans ajouter de solvants et en utilisant simplement l'alcool ou l'acide carboxylique formé lors de la réaction entre l'eau et le(s) alkoxysilane(s). On peut aussi substituer ces solvants par d'autres solvants, tels que des alcools, des cétones, des chlorures d'alkyles, et des solvants aromatiques.

L'hydrolyse avec une solution aqueuse d'acide chlorhydrique est préférée.

Outre les alkoxysilanes, la solution peut également comprendre d'autres particules d'oxydes que les particules de zircone.

Des exemples de telles particules sont des particules de silice, ou des particules d'indice de réfraction élevé telles que des particules d'oxyde de titane, d'oxyde d'antimoine, d'étain, de tantale, de niobium.

On ajoute ensuite dans la composition sol/gel préparée précédemment la solution colloïdale de zircone, en solution aqueuse, ou en solution organique, préférentiellement en solution alcoolique, stabilisée dans l'éthanol, de façon à obtenir un taux de charge massique souhaité (préférentiellement entre 0,1% et 39 % en masse par rapport à la masse d'EST (extrait sec théorique).

La composition sol/gel comprend préférentiellement au moins un catalyseur de durcissement.

Comme exemples de catalyseurs de durcissement, on peut notamment citer les composés de l'aluminium, et en particulier les composés de l'aluminium choisi parmi :

- les chélates d'aluminium, et
- les composés de formules (III) ou (IV) détaillées dessous :

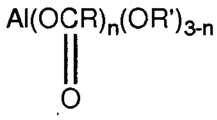 (III)

$(R'O)_{3-n}Al(ORSiR''_3)_n$ (IV)

dans lesquelles :

R et R' sont des groupements alkyles à chaîne linéaire ou ramifiée de 1 à 10 atomes de carbone,
R'' est un groupement alkyle à chaîne linéaire ou ramifiée de 1 à 10 atomes de carbone, un groupement phényle, un groupe

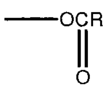

où R a la signification indiquée ci-dessus, et n est un nombre entier de 1 à 3.

Comme on le sait, un chélate d'aluminium est un composé formé en faisant réagir un alcoolate ou un acylate d'aluminium avec des agents séquestrants exempts d'azote et de soufre, contenant de l'oxygène comme atome de coordination.

Le chélate d'aluminium est de préférence choisi parmi les composés de formule (V) :

$AlX_vY_{3-v}$ (V)

dans laquelle :

X est un groupement OL où L est un groupement alkyle de 1 à 10 atomes de carbone,
Y est au moins un coordinat produit à partir d'un composé de formule (1 ) ou (2) :

(1) $M^1 CO CH_2 COM^2$

(2) $M^3 CO CH_2 COOM^4$

dans lesquelles
$M^1$, $M^2$, $M^3$ et $M^4$ sont des groupements alkyles de 1 à 10 atomes de carbone,
et v prend les valeurs 0,1 ou 2.

Comme exemples de composés de formule (V), on peut citer l'acétylacétonate d'aluminium, l'éthylacétoacétate bisacétylacétonate d'aluminium, le biséthylacétoacétate acétylacétonate d'aluminium, le di-n-butoxyde monoéthylacétoacétate d'aluminium et le diipropoxyde mono-méthylacétoacétate d'aluminium.

Comme composés de formule (III) ou (IV), on choisit préférentiellement ceux pour lesquels R' est un groupement isopropyle ou éthyle, et R et R" sont des groupements méthyle.

De façon particulièrement avantageuse, on utilisera de préférence comme catalyseur de durcissement de la composition l'acétyle-acétonate d'aluminium, dans une proportion de 0,1 à 5 % en poids du poids total de la composition.

Tout procédé de dépôt classique peut être utilisé pour déposer le revêtement.

On peut citer le dépôt au trempé, technique selon laquelle le substrat à revêtir est plongé dans un bain de la composition, ou le dépôt par centrifugation.

Le sol est déposé préférentiellement par « spin coating », c'est-à-dire par centrifugation, sur des substrats, par exemple un substrat ORMA®, d'Essilor, à base de poly(bisallyl carbonate de diéthylène glycol). La vitesse de dépôt est comprise entre 100 tr/min et 3000 tr/min, préférentiellement entre 200 tr/min et 2000 tr/min.

Les vernis sont ensuite durcis, préférentiellement par traitement thermique en étuve pour une durée de 1 à 5 heures, typiquement de 3 heures à une température comprise entre 80°C et 120°C.

Les films obtenus présentent typiquement une épaisseur de 1 à 10 microns, préférentiellement de 2 à 5 microns.

Les solutions de zircone obtenues par le procédé de l'invention peuvent être également incorporées dans une solution de primaire d'adhésion ou anti-chocs.

Parmi les compositions de primaire préférées, on peut citer les compositions à base de polyuréthanne thermoplastiques, telles que celles décrites dans les brevets japonais 63-141001 et 63-87223, les compositions de primaires poly(méth)acryliques, telles que celles décrites dans le brevet US-5 015 523, les compositions à base de polyuréthannes thermo-durcissables, telles que celles décrites dans le brevet EP-0404111 et les compositions à base de latex poly (méth)acryliques et latex de polyuréthanne, telles que celles décrites dans les documents de brevets US 5 316 791, EP-0680492.

Les compositions de primaires préférées sont les compositions à base de polyuréthanne et les compositions à base de latex, en particulier les latex de polyuréthanne.

Les latex poly(méth)acryliques sont des latex de copolymères constitués principalement par un (méth)acrylate, tel que par exemple le (méth)acrylate d'éthyle ou de butyle, ou de méthoxy ou éthoxyéthyle, avec une proportion généralement mineure d'au moins un autre comonomère, tel que par exemple du styrène.

Les latex poly(méth)acryliques préférés sont les latex de copolymères acrylate-styrène.

De tels latex de copolymères acrylate-styrène sont disponibles commercialement auprès de la Société ZENECA RESINS sous la dénomination NEOCRYL®.

Les latex de polyuréthanne sont également connus et disponibles dans le commerce.

A titre d'exemple, on peut citer les latex de polyuréthanne contenant des motifs polyesters. De tels latex sont également commercialisés par la Société ZENECA RESINS sous la dénomination NEOREZ® et par la Société BAXENDEN CHEMICAL sous la dénomination WITCOBOND®.

On peut également utiliser dans les compositions de primaire des mélanges de ces latex, en particulier de latex polyuréthanne et de latex poly(méth)acrylique.

Ces compositions de primaire peuvent être déposées sur les faces de l'article d'optique par trempage ou centrifugation puis séchées à une température d'au moins 70 °C et pouvant aller jusqu'à 100 °C, de préférence de l'ordre de 90 °C, pendant une durée de 2 minutes à 2 heures, généralement de l'ordre de 15 minutes, pour former des couches de primaire ayant des épaisseurs, après cuisson, de 0,2 à 2,5 $\mu$m, de préférence 0,5 à 1,5 $\mu$m.

La teneur en extrait sec de colloïde (masse de particules solides) peut varier de préférence de 0,1 à 65%, de préférence de 0,1 à 50%.

La suite de la description se réfère aux figures annexées, qui représentent respectivement :

**Figures 1 à 3:**

des particules de zircone dans la solution colloïdale selon l'invention de l'exemple 1 correspondant visualisées

par MET.(microscopie électronique à transmission).

**Figures 4 :**

des particules de zircone dans la solution colloïdale de l'exemple 2 (comparatif) visualisées par MET.

**Figures 5 et 6 :**

Des particules de zircone au sein d'une matrice polymère correspondant à l'exemple 13.
Les exemples qui suivent illustrent l'invention, de façon non limitative.

**EXEMPLES :**

**Exemple 1 :**

335 ml d'une solution ammoniacale (de concentration 3M) sont ajoutés à une solution aqueuse d'oxychlorure de zirconium (1l de concentration 0,5M). Un précipité d'hydroxyde de zirconium se forme. La précipitation s'effectue sous forte agitation en utilisant un agitateur de type homogénéiseur (de type « Ultraturax »). Le précipité est par la suite récupéré par filtration sur verre fritté (porosité 4) ou par centrifugation. Le gâteau humide alors obtenu est purifié par redispersion (dans de l'eau distillée sous agitation énergique) et filtration (ou centrifugation) successives. Lorsque la valeur du pH des eaux de lavage est stable (autour de pH =7) la purification est terminée. Par observation en microscopie électronique en transmission (MET) du précipité d'hydroxyde de zirconium ainsi purifié, on constate qu'il s'agit d'un produit amorphe (d'après le diagramme de diffraction des électrons non représenté ici) dont la taille des unités élémentaires est difficile à évaluer.
Le gâteau d'hydroxyde de zirconium purifié est finalement redispersé dans une quantité d'eau déterminée. Le contrôle de l'acidité du milieu de synthèse hydrothermale s'effectue à ce stade de la préparation par ajout d'acide ou de base à la solution de redispersion. Pour assurer une parfaite dispersion des particules d'hydroxyde de zirconium la solution est réalisée sous agitation énergique dans un premier temps puis sous sonification dans un deuxième temps. Le « lait » obtenu est introduit dans un bécher en téflon. L'ensemble est alors disposé dans un autoclave pour procéder au traitement hydrothermal. Durant ce traitement la solution est agitée. A la fin de cette étape une solution colloïdale aqueuse de zircone est obtenue. Elle se présente sous forme de solution opalescente avec une teinte légèrement bleutée. Cette solution apparemment stable présente un léger dépôt avec le temps. Pour améliorer grandement la stabilité du sol il alors nécessaire de diminuer la charge ionique de la solution, par dialyse par exemple. Après cette étape et sonification un sol stable est obtenu, son extrait sec est voisin de 7%.
La solution colloïdale de référence est réalisée dans les conditions expérimentales suivantes :

- Concentration en zirconium dans la solution d'hydroxyde : 0,5 mole/l.
- Le rapport molaire HCl/Zr dans la solution d'hydroxyde : 0,1.
- La température et le temps de traitement (en autoclave) sont respectivement : 165°C et 6 heures.
- La stabilité du sol obtenu est améliorée en procédant à une dialyse de celui-ci avec

une membrane de Cellophane pendant 7 jours.
Les caractéristiques du sol obtenu sont les suivantes.

- pH=4,5 ; le potentiel zêta est compris entre 30 et 40 mV (point isoélectrique : pH=7,5).
- Extrait sec : de l'ordre de 6%.
- Les particules sont représentées à différents grossissements
- Taille des particules : autour de 10 nm (figures 1, 2) ; particules monocristallines (figure 3).

**Exemple 2** (comparatif): on reproduit le procédé de l'exemple 1, mais en utilisant un rapport molaire HCL/Zr de 1.

Sur la figure 4, il apparaît clairement que les particules de zircone se présentent sous la forme d'agrégats, ce qui est préjudiciable aux propriétés optiques du sol.

**Exemple 3 : Greffage de l'acide méthacrylique**

- 60g de sol de référence (extrait sec de l'ordre de 5%).
- 2,16g d'acide méthacrylique.

Le mélange est porté à 50°C pendant 1 h, après ce traitement la zircone traitée précipite. Le précipité est récupéré par centrifugation. Une partie de l'excès d'acide méthacrylique est supprimée lors de cette étape. Pour débarrasser entièrement la zircone de l'acide qui n'a pas réagi le précipité est mis en suspension dans l'hexane. Après une nouvelle centrifugation et suppression du surnagent le précipité est facilement redispersé dans l'éthanol. Afin d'ôter les traces d'hexane le solvant (mélange éthanol-trace d'hexane) de la solution colloïdale est alors éliminé à l'évaporateur rotatif. Le solide obtenu est définitivement dispersé dans une quantité donnée d'éthanol ou d'acétone pour former une solution colloïdale stable avec un extrait sec supérieur à 30%. On vérifie sur un spectre infra rouge (non représenté) de la zircone ainsi modifiée que le greffage s'est bien effectué.

**Exemple 4 : Greffage de l'acide fluorophénylacétique**

- 625g de sol de référence (extrait sec de l'ordre de 5%).
- 20g d'acide fluorophénylacétique.

Le mélange est porté à 70°C pendant 1 h, après ce traitement la zircone traitée précipite. Le précipité est récupéré par centrifugation. Une partie de l'excès d'acide fluorophénylacétique est supprimée lors de cette étape. Pour débarrasser entièrement la zircone de l'acide qui n'a pas réagi le précipité est mis en suspension dans le méthanol et récupéré par centrifugation. Après 2 lavages comparables le précipité est finalement redispersé dans la N-méthyl-2-pyrrolidone (NMP) pour former une solution colloïdale stable avec un extrait sec supérieur à 30%.

**Exemple 5 : Greffage de l'acide méthoxyéthoxyéthoxyacétique**

- 50g de sol de référence (extrait sec de l'ordre de 5%).
- 3,7g d'acide méthoxyéthoxyéthoxyacétique.

Le mélange est porté à 70°C pendant 1 h, après ce traitement la zircone traitée est toujours parfaitement dispersée. Afin de se débarrasser de l'acide en excès la solution colloïdale est additionnée goutte à goutte dans un volume important d'acétone. La zircone flocule alors en quelques heures. Après suppression du surnageant, la zircone modifiée est séchée sous vide (T=40°C). La poudre obtenue est redispersée dans un mélange 4-hydroxy-4-methyl-2-pentanone/eau (rapport volume = 2). L'extrait sec est de l'ordre de 30%.

**Exemple 6 : Greffage de l'acide nitrobenzoïque**

- 10g de sol de référence (extrait sec de l'ordre de 5%).
- 0,24g d'acide nitrobenzoïque dissout dans 6ml de méthanol.

Le mélange est porté à 70°C pendant 1 h, après ce traitement la zircone traitée précipite. Le précipité est récupéré par centrifugation. Une partie de l'excès d'acide nitrobenzoïque est supprimée lors de cette étape. Pour débarrasser entièrement la zircone de l'acide qui n'a pas réagi le précipité est mis en suspension dans le méthanol et récupéré par centrifugation. La produit obtenu est redispersé dans l'acétone sous sonification. La solution colloïdale ainsi préparée est thixotrope et présente un extrait sec supérieure à 10%.

**Exemple 7 : Greffage de l'acide ter-butyl phosphonique**

- 10g de sol de référence (extrait sec de l'ordre de 5%).
- 0,21 g d'acide ter-butyl phosphonique.

Le mélange est porté à 80°C pendant 4h, après ce traitement la zircone traitée précipite. Le précipité est récupéré par centrifugation. Une partie de l'excès d'acide ter-butyl phosphonique est supprimée lors de cette étape. Après un lavage à l'eau distillée et centrifugation le précipité est séché sous vide puis redispersé dans la NMP.

**Exemple 8 : Greffage de l'acide (2-méthoxyéthoxy)éthyl phosphonique**

- 10g de sol de référence (extrait sec de l'ordre de 5%).
- 0,38g d'acide (2-méthoxyéthoxy)éthyl phosphonique.

Le mélange est porté à 80°C pendant 4h, après ce traitement la zircone traitée précipite. Le précipité est récupéré par centrifugation.

**Exemples d'incorporation de zircone dans des vernis et substrats**

Des incorporations de nanoparticules de zircone non fonctionnalisées ont pu être réalisées dans des couches minces et dans des substrats photopolymérisables.
Le procédé d'incorporation s'est effectué en deux étapes :

1. Redispersion des nanoparticules, initialement dans l'eau DI, dans un 'solvant réactif' par échange de solvant en évaporant l'eau à l'évaporateur rotatif.
2. Polymérisation, par rayonnement UV ou voie thermique, en faisant réagir le 'solvant réactif' avec des monomères assurant la réticulation du réseau.

Ainsi, des vernis transparents ont été réalisés avec un taux de nanoparticules de 29% en masse. L'indice de réfraction de la couche mince passe de 1.50-1,53 pour la matrice de référence sans nanoparticules (voir tableau 3) à environ 1.60 avec 29% en masse de nanoparticules.
Des substrats photopolymérisables ont pu être réalisés avec une bonne dispersion des nanoparticules de zircone à taux de 20%.

A. <u>Redispersion des nanoparticules de zircone dans un monomère méthacrylique :</u>

Le sol de zircone utilisé est le sol de l'exemple 1.
Les nanoparticules de zircone, initialement dans l'eau, sont redispersées dans un solvant réactif par évaporation à l'évaporateur rotatif (Rotavap) :
Il s'agit de concentrer à 30% les nanoparticules de zircone dans le solvant réactif.

<u>Mode opératoire :</u>

- Matériel requis (pour 50g de produit final, avec un extrait sec en $ZrO_2$ égale à 35.75% en masse dans HEMA) :

  *Evaporateur rotatif avec bain thermostaté et contrôle de pression. (appareil utilisé : référence : ROTAVAPOR R-200 constructeur BUCHI)
  *Ballon 1 L pour évaporateur

- Réactifs utilisés / quantités utilisées :

  *Nanoparticules de zircone dispersée dans l'eau DI =309.24g ;
  (Extrait Sec à 160°C= 6.15%, m $ZrO_2$=19.02g, m $H_2O$=290.22g)
  *Hydroxylethylméthacrylate 97% (HEMA) = 34.17g

- Pesée et mélange : Durée 15 minutes

  1. On préchauffe le bain (eau DI) thermostaté du ROTAVAPOR à 60°C
  2. 309.24g de solution de Zircone aqueuse sont introduites dans un ballon.

3. puis 34.17g d'HEMA sont rajoutées dans le ballon.
4. Le ballon est fixé au ROTAVAPOR et plongé dans le bain réglé à 60°C
5. Le ballon est mis en rotation au ¾ de sa vitesse maximale.

- Evaporation de l'eau contenue dans le ballon : Durée 2h30

1. Le vide est progressivement établi dans le ballon et on stabilise le vide lorsqu'un frémissement apparaît à la surface du liquide.
2. Une fois l'équilibre liquide-vapeur stabilisé (plus de bulles à la surface), la pression dans le ballon est diminuée.
3. Les étapes 1 et 2 sont reproduites jusqu'à obtenir une pression de 68 mbar dans le ballon.
4. Au bout de 2h30, essuyer et peser le ballon et calculer la masse d'eau restante.
5. S'il reste de l'eau, continuer l'étape 3 jusqu'à obtenir un maximum de 2% massique d'eau résiduelle. (Le contrôle de la pureté se fait par le contrôle de masse).

Les solutions obtenues figurent dans le tableau 1.

Tableau 1

| | HEMA | |
|---|---|---|
| %ZrO2 dans (ZrO2+HEMA) | 35.8% | 42.4% |
| Stabilité | Pas de précipité | Pas de précipité |
| Aspect | Gel visqueux manipulable translucide | Gel visqueux difficilement redispersable |

La solution d'HEMA contenant 35.8% de zircone est stable, c'est-à-dire qu'elle n'engendre pas de précipité. La solution à 42.5% de zircone donne lieu à la formation d'un gel non manipulable. Cependant, cette solution est stable.

B. Formulation de vernis méthacrylique à base de $ZrO_2$ :

Dans les exemples qui suivent, la formation d'un réseau thermodurcissable tridimensionnel est obtenu par l'ajout d'un réactif méthacrylique dysfonctionnel NS140 (bisphénolA 4éthoxylé di(méth)acrylate) et le BMTES permettent d'augmenter l'indice de réfraction de la matrice de référence, et de réticuler le système afin d'améliorer sa résistance mécanique et chimique.

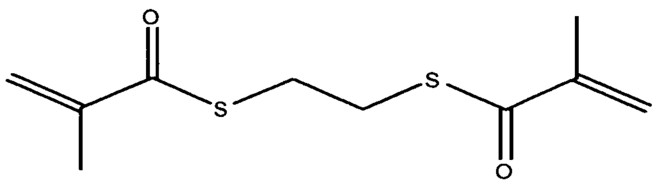

BMTES
(bisméthyl thiométhacrylate)

Par ailleurs, BMTES ($n_l$=1.57) possède un indice liquide plus élevé que NS140 ($n_l$=1.54), ce qui permet d'envisager de limiter l'écart d'indice entre les nanoparticules et la matrice organique.

1. Formulations de vernis:

(Tous les pourcentages expriment un rapport massique.)

Tableau 2

<table>
<tr><th></th><th>Vernis 1</th><th>Vernis2</th><th>Vernis3</th></tr>
<tr><td>Matrices organiques testées</td><td>HEMA (100%)</td><td>HEMA / NS140 (72% / 28%)</td><td>HEMA/BMTES (72% / 28%)</td></tr>
<tr><td>% Zircone (/ matrice+zircone)</td><td colspan="3">29%</td></tr>
<tr><td>Etapes de mélange</td><td>HEMA +ZrO2 (ES=35.8%)<br>+<br>HEMA<br>+<br>photoamorceur: Irg500<br>+<br>HMP</td><td>HEMA +ZrO2 (ES=35.8%)<br>+<br>NS140<br>+<br>Irg500<br>+<br>HMP</td><td>HEMA +ZrO2 (ES=35.8%)<br>+<br>BMTES<br>+<br>Irg500<br>+<br>HMP</td></tr>
<tr><td>Conditions de mélange</td><td colspan="3">T amb sous agitation Sonification 10% pendant 1 min toutes les 5s.</td></tr>
<tr><td>Aspect</td><td>Liquide stable translucide</td><td colspan="2">Liquide stable translucide et visqueux</td></tr>
</table>

Le pourcentage massique de photoamorceur, Irgacure 500 (CIBA) est de 5% dans la composition de la matrice polymérisée (sans HMP).

2. Dépôt et polymérisation des vernis :

Chacun des vernis 1 à 3 ci-dessus est déposé par centrifugation sur une lentille ophtalmique en ORMA® (polymère de diallylcarbonate de diéthylène glycol), de puissance -2 dioptries.

Paramètres de dépôt:

Centrifugation :

Temps : 30 secondes
Accélération : 500 rpm/s
Vitesse : variable suivant la viscosité de l'échantillon.

Polymérisation :

Four UV LH6 Fusion
BulbH / hauteur 11.5 cm
Puissance lampe : 100%
Vitesse tapis (Set) : 22
Nombre de passage : 4

3. Propriétés optiques des vernis hybrides (organiques/inorganiques) photopolymérisables obtenus

Matrice organique pure sans Zircone (référence):

Tableau 3

| vernis testées | HEMA (100%) | HEMA/ NS140 (72% / 28%) | HEMA/BMTES (72% / 28%) |
|---|---|---|---|
| % Zircone (/ matrice +zircone) | 0 | | |
| % HMP (/matrice+zircone +HMP) | 0 | 0 | 0 |
| Vitesse de spin (tour / rpm) | 300 | 1500 | 1000 |
| Epaisseur en micron (Eotech) | 2 | 1.7 | 2.7 |
| Indice liquide à 19°C | 1.46 | 1.48 | 1.49 |
| Indice (Eliomètre) | 1.50 à 1.51 | 1.52 | 1.53 |
| Aspect | Transparent | Transparent | transparent |

Composition de vernis avec 29% de zircone :

Tableau 4

| | **Exemple 9** | | **Exemple10** | | **Exemplel 11** |
|---|---|---|---|---|---|
| | Vernis 1 | | Vernis 2 | | Vernis 3 |
| Composition | HEMA (100%) | | HEMA / NS140 (72% / 28%) | | HEMA/BMTES (72% / 28%) |
| % Zircone (/ matrice+ zircone) | 29 | | | | |
| % HMP (/matrice+zircone +HMP) | 0 | 30 | 30 | 50 | 30 |
| Vitesse spin (tour / rpm) | 4000 | 500 | 1500 | 500 | 1000 |
| Epaisseur en micron (Eotech) | 2 à 2.3 | 2 à 2.3 | 1.7à2.6 | 2.33 | 2 |
| Indice (Eliomètre) | 1.60 à 1.61 | 1.60 à 1.61 | 1.57 à 1.59 | 1.57 à 1.59 | 1.59 à 1.6 |
| Aspect | Transparent | Transparent | Transparent | Transparent | Transparent |

Le HMP (4-hydroxy-4-methyl-2-pentanone /Cas: 123-42-2) est un solvant utilisé pour adapter la viscosité du mélange et optimiser l'épaisseur du vernis déposé par spin. Le solvant est totalement évaporé à la polymérisation du vernis.

L'indice liquide des mélanges est mesuré à l'aide d'un réfractomètre liquide thermostaté (Référence : ATAGO 3T).

L'épaisseur et l'indice du vernis polymérisé se mesure par réflexion de la lumière sur le substrat par un appareil EOTECH.

Il apparaît que, pour une couche mince à base d' HEMA, un taux de 29% de zircone fait passer l'indice de réfraction de cette couche mince de 1.50 à 1.60. Le vernis reste transparent avec une diffusion acceptable.

II. Incorporation de Zircone dans des matrices organiques d'épaisseur 2mm (substrats) :

A. Substrats méthacryliques photopolymérisable sous UV :

1. Formulation :

(Tous les pourcentages expriment un rapport massique.)

Tableau 5

| Matrices testées | HEMA (100%) | HEMA/BMTES (72% / 28%) |
|---|---|---|
| % Zircone (/matrice+zircone) | 20% | |

(suite)

| Matrices testées | HEMA (100%) | HEMA/BMTES (72% / 28%) |
|---|---|---|
| Etapes de mélange | HEMA +ZrO2 (ES=35.8%)<br>+<br>HEMA<br>+<br>Irgacure CG1819 (CIBA) | HEMA +ZrO2 (ES=35.8%)<br>+<br>BMTES<br>+<br>CG1819 |
| Conditions de mélange | T ambiante sous agitation Sonification 10% pendant 1 min toutes les 5s. | |
| Aspect | Liquide stable | translucide |

Le pourcentage de photoamorceur, CGI 819 est de 0.1 %.

<u>2. Paramètres polymérisation :</u>

Moules bi plans siliconés d'épaisseur 2mm Four UV IST (lampe dopée fer)

Puissance moyenne des lampes : 34 mW/cm$^2$

<u>Tableau 6</u>

| | **Exemple 12** | **Exemple 13** |
|---|---|---|
| | HEMA | HEMA/BMTES (72 / 28) |
| $ZrO_2$ | 20% | 20% |
| Conversion des liaisons méthacrylate par spectroscopie Infra rouge (suivi de la bande à 6200 cm$^{-1}$) | 100% conversion C=C | 94% conversion C=C |
| Aspect | Translucide diffusant | Translucide diffusant |

3. Des analyses au microscope électronique par transmission (MET) ont été réalisées sur la matrice hybride (HEMA+BMTES+ $ZrO_2$).

Les nanoparticules de zircone sont bien dispersées dans la matrice organique HEMA+BMTES comme on peut le voir sur les figures 5 et 6 (grossissements différents). La taille moyenne des nanoparticules mesurée est de 15 nm.

## Revendications

**1.** Procédé, de préparation d'une solution colloïdale de particules de zircone non agglomérées, **caractérisé en ce qu'**il comprend les étapes suivantes :

a) l'obtention d'une suspension d'hydroxyde de zirconium,
b) l'ajout à ladite suspension d'un acide minéral dans un rapport molaire [acide minéral]/[Zr] <0,5,
c) le traitement hydrothérmal de ladite suspension,
d) la récupération de la solution colloïdale de particules de zircone.

**2.** Procédé selon la revendication 1, **caractérisé en ce que** la suspension d'hydroxyde de zirconium est une suspension, aqueuse.

**3.** Procédé selon la revendication 2, **caractérisé en ce que** la suspension d'hydroxyde de zirconium est obtenue par traitement basique d'une solution aqueuse d'oxychlorure de zirconium, comprenant de préférence une étape d'ajout d'une solution ammoniacale à ladite solution d'oxychlorure de zirconium.

**4.** Procédé selon la revendication 3, **caractérisé en ce que** ladite suspension d'hydroxyde de zirconium est obtenue par la séparation et la purification d'un précipité d'hydroxyde de zirconium issu dudit traitement basique, suivie d'une redispersion en milieu aqueux dudit précipité.

**5.** Procédé selon l'une quelconque des revendications précédentes, **caractérisé en ce que** le pH de la suspension d'hydroxyde de zirconium est de l'ordre de 7 à l'étape a).

**6.** Procédé selon l'une quelconque des revendications précédentes, **caractérisé en ce que** le rapport molaire [acide minéral]/[Zr] varie de 0,01 à 0,5, préférentiellement de 0,05 à 0,2.

**7.** Procédé selon l'une quelconque des revendications précédentes **caractérisé en ce que** le traitement hydrothermal est effectué en autoclave à une température de 150 à 200°C, et de préférence de l'ordre de 165°C, et dure de préférence de 3 heures à 3 jours.

**8.** Procédé selon l'une quelconque des revendications précédentes, **caractérisée en ce qu'**il comprend une étape supplémentaire de greffage, à la surface des particules de zircone de composés porteurs de groupements assurant une répulsion stérique et/ou électrostatique entre lesdites particules de zircone.

**9.** Procédé selon la revendication 8, **caractérisé en ce que** lesdits composés porteurs de groupements assurant une répulsion stérique et/ou électrostatique comprennent une fonction acide carboxylique, phosphonique ou sulphonique.

**10.** Procédé de préparation d'une composition de particules de zircone, **caractérisé en ce qu'**il comprend la préparation d'une solution colloïdale de particules de zircone selon l'une quelconque des revendications précédentes et l'incorporation d'un solvant réactif dans la solution colloïdale de particules de zircone.

**11.** Procédé selon la revendication 10, **caractérisé en ce que** le solvant réactif est un monomère comportant une fonction acrylique ou méthacrylique et une fonction alcool, de préférence l'h-ydroxyethylinéthacrylate.

**12.** Procédé selon l'une quelconque des revendications 10 et 11, **caractérisé en ce que** les particules de zircon sont initialement en milieu aqueux et que le solvant réactif est introduit par redispersion desdites particules dans le solvant réactif.

## Claims

**1.** A method for preparing a colloidal solution of non-aggregated zirconia particles, **characterized in that** it comprises the following steps:

a) providing a zirconium hydroxide suspension,
b) adding to said suspension an inorganic acid according to an [inorganic acid]/[Zr] molar ratio of <0.5,
c) hydrothermally treating said suspension,
d) recovering the colloidal solution of zirconia particles.

**2.** A method according to claim 1, **characterized in that** said zirconium hydroxide suspension is an aqueous suspension.

**3.** A method according to claim 2, **characterized in that** said zirconium hydroxide suspension is obtained by conducting a basic treatment of a zirconium oxychloride aqueous solution comprising preferably a step of adding to said zirconium oxychloride solution an ammonia solution.

**4.** A method according to claim 3, **characterized in that** said zirconium hydroxide suspension is obtained by separating and purifying a zirconium hydroxide precipitate resulting from said basic treatment, hollowed with a redispersion in an aqueous medium of said precipitate.

**5.** A method according to anyone of preceding claims, **characterized in that** the pH value of the zirconium hydroxide suspension is of about 7 in step a).

**6.** A method according to anyone of preceding claim, **characterized in that** the [inorganic acid]/[Zr] molar ratio does range from 0.01 to 0.5, preferably from 0.05 to 0.2.

**7.** A method according to anyone of preceding claim, **characterized in that** the hydrothermal treatment is preferably

performed in an autoclave at a temperature ranging from 150 to 200°C, and preferably of about 165°C, and preferably for a time period ranging from 3 hours to 3 days.

**8.** A method according to anyone of preceding claim, which comprises an additional grafting step onto the zirconia particle surface of compounds carrying moieties that perform a steric and/or an electrostatic repulsion between said zirconia particles.

**9.** A method according to claim 8, **characterized in that** said compounds carrying moieties that perform a steric or an electrostatic repulsion comprise a carboxylic acid, a phosphonic acid or a sulfonic acid function.

**10.** A method for preparing a zirconia particle composition which comprises the preparation of a zirconia particle colloidal solution according to anyone of preceding claim, and the incorporation of a reactive solvent into the zirconia particle colloidal solution.

**11.** A method according to claim 10, **characterized in that** the reactive solvent is a monomer comprising an acrylic or methacrylic function and an alcohol function, and preferably is hydroxyethyl methacrylate.

**12.** A method according to anyone of claims 10 and 11, **characterized in that** the zirconia particles are initially in an aqueous medium and the reactive solvent is introduced by redispersing said particles within the reactive solvent.

## Patentansprüche

**1.** Verfahren zur Herstellung einer kolloidalen Lösung aus nicht-aggregierten Zyrkonpartikeln, **dadurch gekennzeichnet, dass** es die folgenden Schritte umfasst:

a) Erhalten einer Suspension aus Zyrkonium-Hydroxid,
b) Hinzufügen zu der Suspension einer Mineralsäure in einem molaren Verhältnis [Mineralsäure]/[Zr]<0,5,
c) Hydrothermale Behandlung der Suspension,
d) Zurückgewinnen der kolloidalen Lösung aus Zyrkonpartikeln.

**2.** Verfahren nach Anspruch 1, **dadurch** gekenntzeichnet, dass die Suspension aus Zyrkonium-Hydroxid eine wässerige Suspension ist.

**3.** Verfahren nach Anspruch 2, **dadurch gekennzeichnet, dass** die Suspension aus Zirkonium-Hydroxid durch basische Behandlung einer wässrigen Lösung aus Zyrkonium-Oxychlorid erhalten wird, und vorzugsweise einen Schritt des Hinzufügens einer ammoniakhaltigen Lösung zu der Lösung aus Zyrkonium-Oxychiorid umfasst.

**4.** Verfahren nach Anspruch 3, **dadurch gekennzeichnet, dass** die Suspension aus Zyrkonium-Hydroxid durch Trennung und Reinigung eines Präzipitats von Zyrkonium-Hydroxid verhalten wird, das aus der basischen Behandlung entstanden ist, gefolgt von einer Redispersion des Präzipitats im wässrigen Milieu.

**5.** Verfahren nach einem der vorhergehenden Ansprüche, **dadurch gekennzeichnet, dass** der pH der Suspension aus Zyrkoniumhydroxid bei Schritt a) in der Größenordnung von 7 ist.

**6.** Verfahren nach einem der vorhergehenden ansprüche, **dadurch** gekenntzeichnet, dass das molare Verhältnis [Mineralsäure]/[Zr] von 0,01 bis 0,5 variiert, bevorzugt von 0,05 bis 0,2.

**7.** Verfahren nach einem der vorhergehenden Ansprüche, **dadurch gekennzeichnet, dass** die hydrothermale Behandlung in einem Autoklaven bei einer Temperatur von 150 bis 200°C und vorzugsweise in der Größenordnung von 165°C durchgeführt wird, und vorzugsweise 3 Stunden bis 3 Tage dauert.

**8.** Verfahren nach einem der vorhergehenden Ansprüche, **dadurch gekennzeichnet, dass** es auf der Oberfläche der Zyrkonpartikel einen zusätzlichen Schritt der Veredelung mit Verbindungen, die Gruppen tragen, die eine sterische und/oder elektrostatische Abstoßung zwischen den Zyrkonpartikeln gewährleisten, umfasst.

**9.** Verfahren nach Anspruch 8, **dadurch gekennzeichnet, dass** die Verbindungen, die Gruppen tragen, die eine sterische und/oder elektrostatische Abstoßung gewährleisten, eine Carboxyl-, Phosphon- oder Sulphon-Säure-Funktion umfassen,

10. Verfahren zur Herstellung einer Zusammensetzung aus Zyrkoupartikeln, **dadurch gekennzeichnet, dass** es die Herstellung einer kolloidalen Lösung aus Zyrkonpartikeln nach einem der vorhergehenden Ansprüche und die Beimischung eines reaktiven Lösungsmittels in die kolloidale Lösung aus Zyrkonpartikeln umfasst.

11. Verfahren nach Anspruch 10, **dadurch gekennzeichnet, dass** das reaktive Lösungsmittel ein Monomer ist, das eine Acryl- oder Methacryacryl-Funktion und eine Alkohol-Funktion aufweist, vorzugsweise Hydroxyethylmethacrylat.

12. Verfahren nach einem der Ansprüche 10 und 11, **dadurch gekennzeichnet, dass** die Zyrkonpartikel anfänglich im wässrigen Milieu sind und das reaktive Lösungsmittel durch Redispersion der Partikel in das reaktive Lösungsmittel eingeleitet wird.

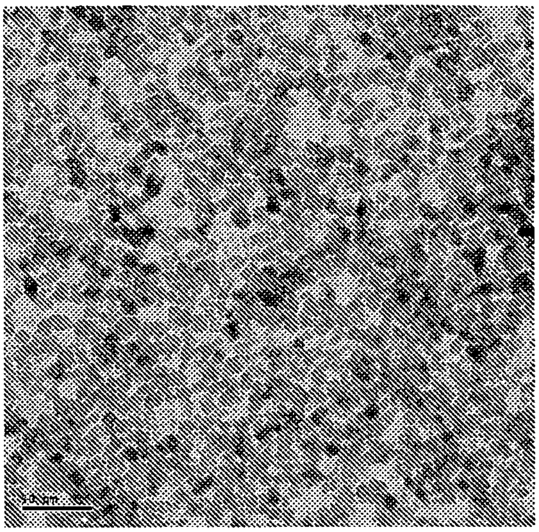

Figure 1

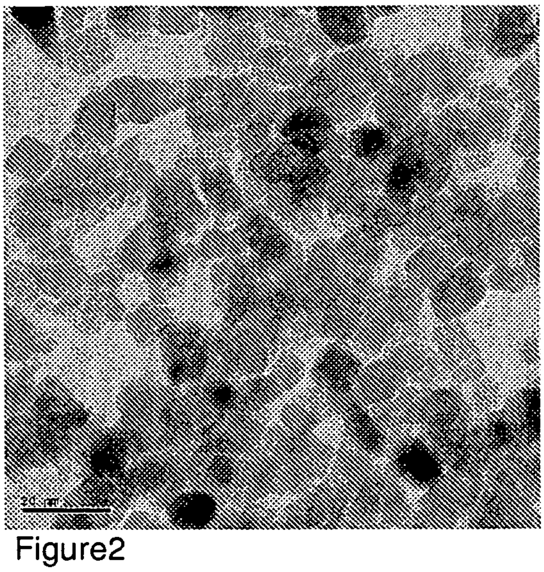

Figure2

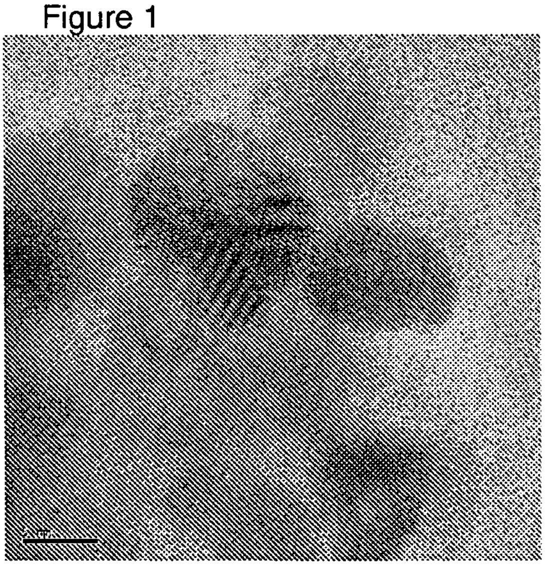

Figure 3

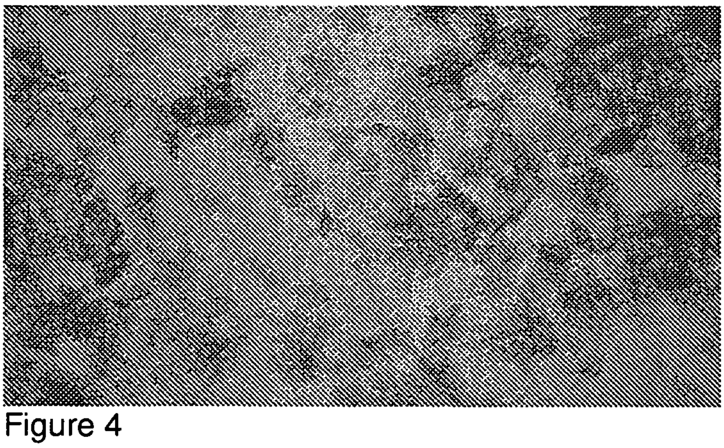
Figure 4

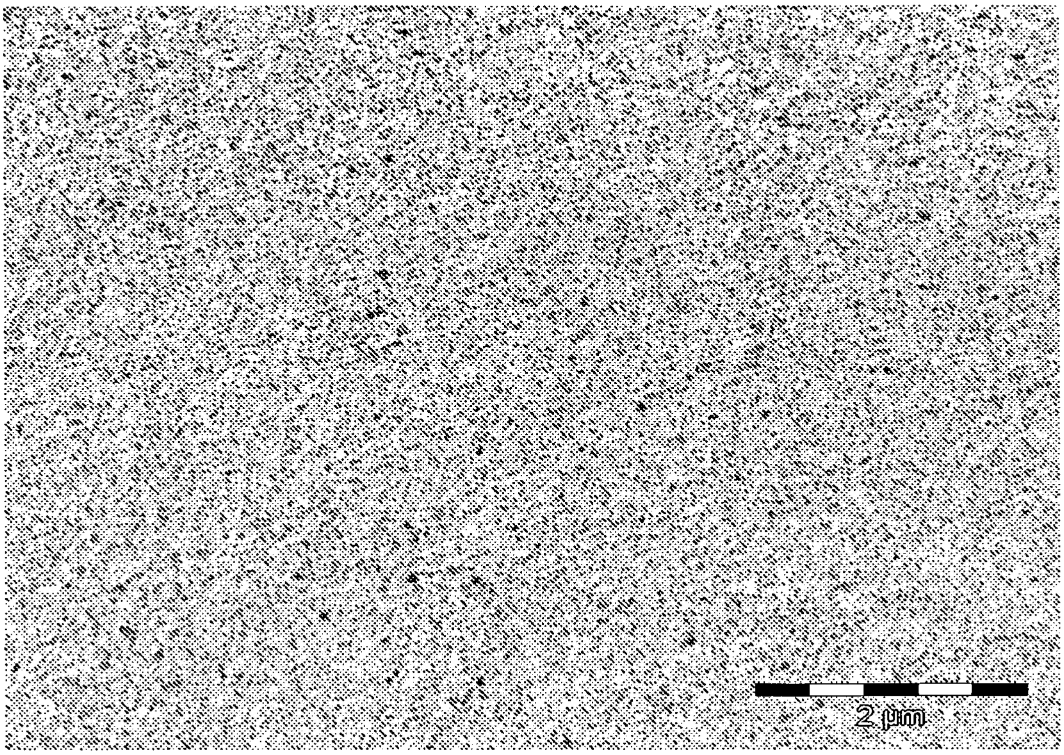


Figure 5

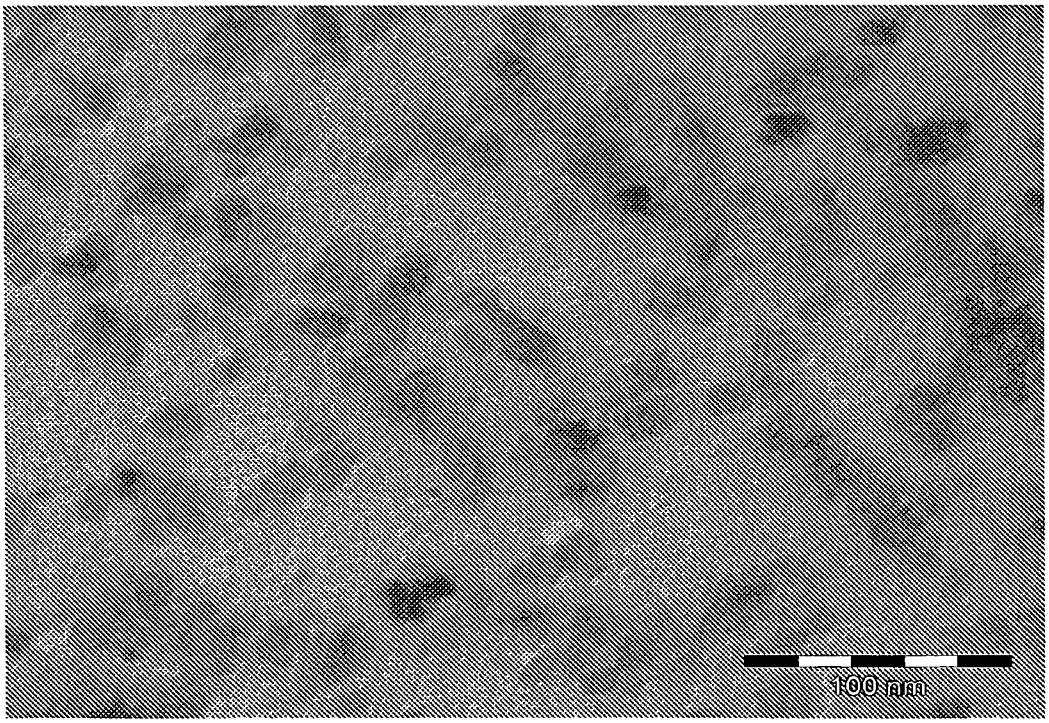


Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- JP 6321541 A
- US 20060148950 A
- US 20050059766 A
- US 20060204679 A
- US 20030021566 A
- EP 233343 A
- US 2002004544 A
- FR 2734827 A
- EP 614957 A
- US 4211823 A
- JP 63141001 A
- JP 63087223 A
- US 5015523 A
- EP 0404111 A
- US 5316791 A
- EP 0680492 A